# EUROPEAN PATENT SPECIFICATION

(11) **EP 4 246 157 B1**
(45) Date of publication and mention of the grant of the patent: **18.09.2024**
(21) Application number: 22162243.4
(22) Date of filing: 15.03.2022
(51) Int. Cl.: G01R 31/3185, G06F 11/36, G06F 21/71, G06F 21/78, G11C 17/18, G06F 21/57, G11C 7/24, H04L 41/0806, H04L 41/28

(54) **A PROVISIONING CONTROL APPARATUS FOR PROVISIONING AN ELECTRONIC COMPONENT FOR ELECTRONIC EQUIPMENT**
BEREITSTELLUNG EINES STEUERGERÄTS ZUR BEREITSTELLUNG EINES ELEKTRONISCHEN BAUTEILS FÜR EINE ELEKTRONISCHE AUSRÜSTUNG
APPAREIL DE COMMANDE D'APPROVISIONNEMENT POUR L'APPROVISIONNEMENT D'UN COMPOSANT ÉLECTRONIQUE POUR UN ÉQUIPEMENT ÉLECTRONIQUE

(43) Date of publication of application: 20.09.2023
(73) Proprietor: Secure Thingz Limited, Trumpington, Cambridge CB2 9FF (GB)
(72) Inventor: DUNNE, Peter, Godmanchester, Huntingdon PE29 2NG (GB); WOODRUFF, Tim, Cambridge CB2 1RR (GB)
(74) Representative: Patentship Patentanwaltsgesellschaft mbH

(56) References cited:
- US-A1- 2013 046 981
- US-A1- 2019 163 909
- US-A1- 2019 213 359

## Description

### TECHNICAL FIELD

The invention relates to the secure production and provisioning of electronic components for electronic equipment. More specifically, the invention relates to an apparatus for controlling the provisioning of electronic components, such as electronic chips, for electronic equipment with security sensitive provisioning data.

### BACKGROUND OF THE INVENTION

The production and assembly of state-of-the-art electronic equipment, such as smartphones, tablet computers as well as other types of electronic consumer or loT equipment, often happens in a distributed fashion in that the various electronic components, including the electronic chips of electronic consumer equipment are manufactured, provisioned or personalized and finally assembled at different locations and by different parties. For instance, an electronic component for an electronic equipment may be originally manufactured by a chip manufacturer and provisioned by another party with security sensitive provisioning data, such as a firmware, before being assembled into the final end product by the manufacturer of the electronic equipment, e.g. an OEM. A similar problem may arise in In-system programming (ISP), also called in-circuit serial programming (ICSP), where electronic components may be programmed, i.e. provided with security sensitive provisioning data, while already installed in an electronic equipment, rather than requiring the electronic component, e.g. electronic chip, to be programmed prior to installing it into the electronic equipment.

For security reasons the respective electronic component, e.g. electronic chip generally has to be locked down at the end of the provisioning procedure, for instance, by disabling a debug interface of the electronic chip to prevent an external direct access to memory or the processor cores of the electronic chip. However, even after locking down the electronic component, e.g. electronic chip it would be desirable to be able to perform some basic control and/or monitor functions of the electronic chip by the provisioning system, for instance, a monitoring function to verify that the provisioning of the electronic component, e.g. electronic chip has been successful.

US 2019/163909 teaches methods for provisioning a semiconductor chip device that includes a number of access/debug ports. The provisioning data may be received from a remote key-management server and transferred to the chip by a tester and a hardware security module located at the manufacturing facility. Such transfer may be done using SPI pins located on the device. Various device states, including a "provisioned" state, may be encoded. For security reasons, the chip may be placed in a "lock down" state, where access ports are disabled.

### SUMMARY OF THE INVENTION

It is therefore an object of the invention to provide an improved provisioning control apparatus for controlling the provisioning of electronic components, such as electronic chips, for electronic equipment with security sensitive provisioning data as well as such an electronic component.

The foregoing and other objects are achieved by the subject matter of the independent claims. Further implementation forms are apparent from the dependent claims, the description and the figures.

According to a first aspect a provisioning control apparatus is provided, which is configured to be coupled to a provisioning apparatus, wherein the provisioning apparatus is electrically connectable with a plurality of pins of an electronic component for provisioning the electronic component with security sensitive provisioning data. The provisioning control apparatus comprises a communication interface configured to provide the security sensitive provisioning data via the provisioning apparatus to the electronic component. The communication interface is further configured to trigger a lockdown of the electronic component. The communication interface is further configured to determine via the provisioning apparatus one or more states of the plurality of pins of the electronic component for determining a state of the electronic component, after the electronic component has been locked down.

In an embodiment, the communication interface is further configured to set via the provisioning apparatus one or more states of the plurality of pins of the electronic component for controlling the state of the electronic component, after the electronic component has been locked down.

In an embodiment, the communication interface is configured to determine via the provisioning apparatus the one or more states of the plurality of pins of the electronic component for determining the state of the electronic component, after a predetermined timeout.

In an embodiment, the plurality of pins of the electronic component comprise two pins and wherein a first state of the two pins defines that the provisioning has been successful and has been finished.

In an embodiment, a second state of the two pins defines that the provisioning has not been finished yet.

In an embodiment, a third state of the two pins defines that the provisioning has not been successful and has been finished.

In an embodiment, a fourth state of the two pins defines that the electronic component is in an undefined state.

According to a second aspect an electronic component, in particular an electronic chip for being provisioned with security sensitive provisioning data is provided. The electronic component comprises a communication interface having a plurality of pins, wherein the communication interface is configured to receive the security sensitive provisioning data from a provisioning control apparatus via a provisioning apparatus. The communication interface is further configured to trigger a lockdown of the electronic component. The communication interface is further configured to set one or more states of the plurality of pins for reporting a state of the electronic component, after the electronic component has been locked down.

In an embodiment, the communication interface is further configured to read one or more states of the plurality of pins for changing the state of the electronic component, after the electronic component has been locked down.

In an embodiment, the plurality of pins of the electronic component comprise two pins and wherein a first state of the two pins defines that the provisioning has been successful and has been finished.

In an embodiment, a second state of the two pins defines that the provisioning has not been finished yet.

In an embodiment, a third state of the two pins defines that the provisioning has not been successful and has been finished.

In an embodiment, a fourth state of the two pins defines that the electronic component is in an undefined state.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a provisioning system including a provisioning control apparatus and a provisioning apparatus for provisioning an electronic component according to an embodiment of the invention with security sensitive data;
Fig. 2 shows a signaling diagram illustrating a monitoring and control function implemented by the provisioning control apparatus according to an embodiment for a post-lockdown monitoring and controlling of the provisioned electronic device; and
Fig. 3 shows a signaling diagram illustrating some further details of a monitoring and control function implemented by the provisioning control apparatus according to an embodiment for a post-lockdown monitoring and controlling of the provisioned electronic device.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

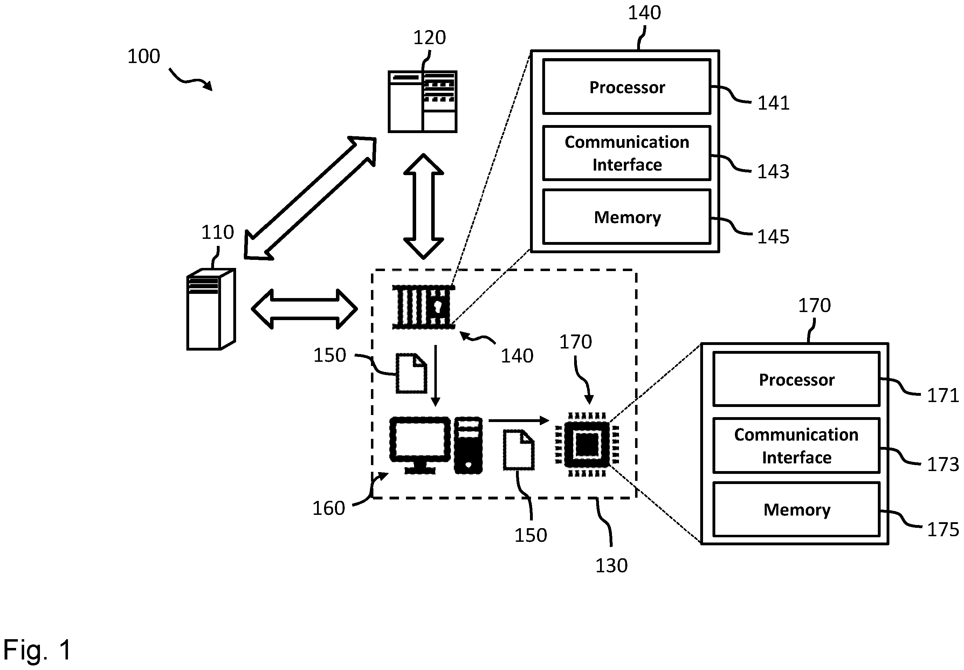

Figure 1 shows a schematic diagram of a provisioning system 100 for provisioning a plurality of electronic components, in particular electronic chips 170 according to an embodiment of the invention for electronic equipment. As will be described in more detail further below, in the embodiment shown in figure 1 the provisioning system 100 comprises a provisioning control apparatus 140, a remote server 110, a security server 120 and a provisioning apparatus 160 (also referred to as "programmer" 160) for provisioning or personalizing electronic components, such as electronic chips or microprocessors 170 with security sensitive provisioning data 150, which may include a security sensitive software application such as a firmware to be executed by the respective electronic component 170. In an embodiment, the security sensitive provisioning data 150 may further include electronic keys, certificates and/or configuration data, such as register settings.

As illustrated in figure 1, the provisioning control apparatus 140, the remote server 110 and the security server 120 may be configured to communicate with each other via a communication network, such as the Internet. Thus, the provisioning control apparatus 140, the remote server 110 and the security server 120 may be at different locations and under the control of different parties. As illustrated in figure 1, the provisioning control apparatus 140 and the provisioning apparatus 160 may be located within a production environment 130, such as a personalization factory 130. In an embodiment, the remote server 110 may be under the control or associated with an electronic equipment manufacturer, e.g. an OEM, wherein the electronic equipment manufacturer assembles electronic equipment, such as smartphones, tablet computers or other types of loT or electronic consumer equipment, using the electronic components, e.g. electronic chips or microprocessors 170 provisioned by the provisioning apparatus 160 with the security sensitive provisioning data 150.

In an embodiment, the provisioning control apparatus 140, the remote server 110 and the security server 120 are configured to securely communicate with each other using one or more cryptographic schemes, such as a public key infrastructure and/or a hybrid cryptographic scheme. In an embodiment, the provisioning control apparatus 140 may be under the remote control of the security server 120.

The provisioning control apparatus 140 is configured to be coupled to the provisioning apparatus 160, for instance, by a wired or a wireless connection. In an embodiment, the provisioning apparatus 160 may be implemented as a personal computer and the provisioning control apparatus 140 may be implemented as a PC card inserted in the provisioning apparatus 160. In an embodiment, the provisioning control apparatus 140 may be implemented as a hardware security module (HSM). The provisioning apparatus 160 may comprise an electrical and/or mechanical interface for interacting directly or indirectly via a provisioning equipment with the electronic components 170. For instance, the provisioning apparatus 160 may comprise a personalization tray for personalizing a batch of electronic components, e.g. electronic chips 170 inserted therein.

In the embodiment illustrated in figure 1 the provisioning control apparatus 140 may comprise a processor 141, a communication interface 143 and a non-volatile memory 145. The communication interface 143 of the provisioning control apparatus 140 is configured to securely provide the provisioning data 150, including the security sensitive application, e.g. firmware to the provisioning apparatus 160 for storing the provisioning data 150 in a respective electronic component, e.g. chip 170.

In an embodiment, the communication interface 143 of the provisioning control apparatus 140 is configured to receive the provisioning data 150 from the remote OEM server 110 or the remote security server 120. In an embodiment, the communication interface 143 of the provisioning control apparatus 140 is further configured to receive at least a part of the provisioning data 150 in encrypted form. In an embodiment, the processor 141 of the provisioning control apparatus 140 is configured to generate at least a portion of the provisioning data 150 itself.

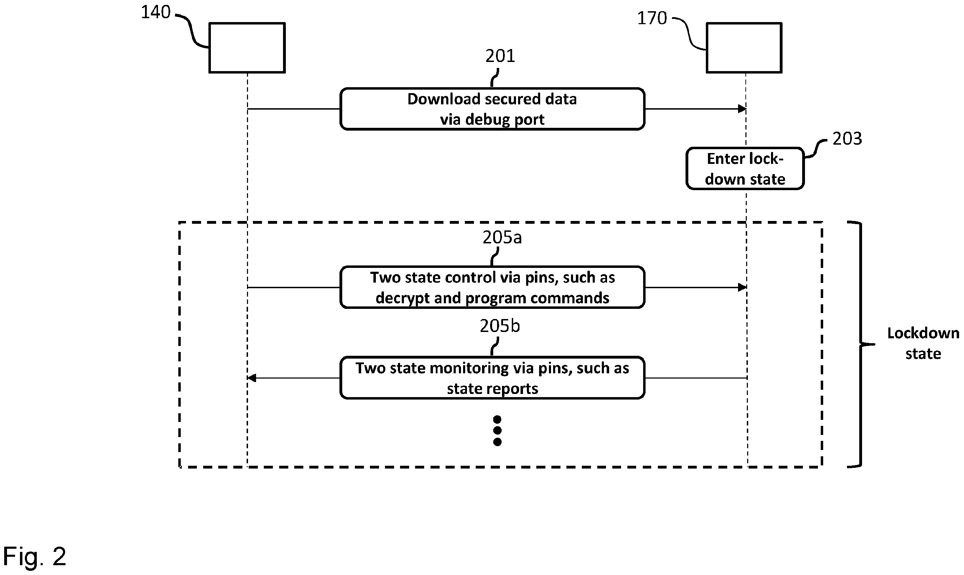

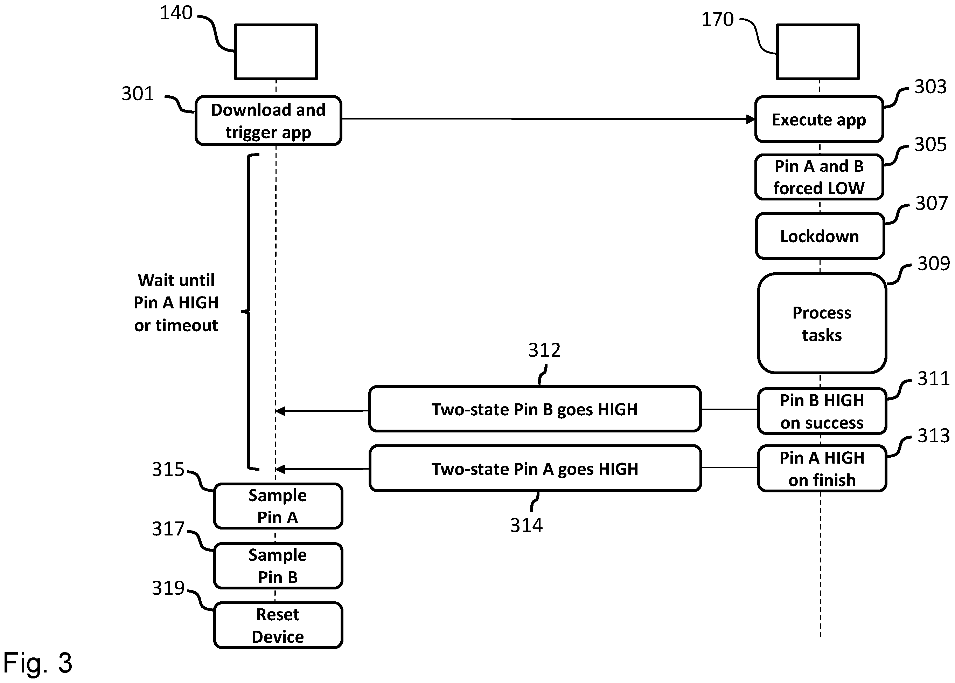

As will be described in more detail in the following in the context of figures 2 and 3, the provisioning control apparatus 140 supports the ability to monitor and/or control some basic functions of the electronic component, e.g. chip 170 after it has been provided with the security sensitive provisioning data 150 and locked down. In this context, locking down the electronic component, e.g. chip 170 is a security technique which may ensure that (a) there is no direct external access to read or write to the memory 175 of the electronic component 170, (b) there is no means to directly control the processor 171 or execute code on it by means of external control; and/or (c) there is no direct mechanism to install new software on the component 170 such that the processor 171 may access the new software on boot. Instead, following security lockdown, all external interfaces of the electronic component 170 may only be arbitrated by software already running on the electronic component, e.g. chip 170. Techniques for applying a security lockdown may differ between different electronic components 170, but may typically involve disabling the access to a debug port of the electronic component 170 and/or blowing one or more virtual fuses of the electronic component 170.

In an embodiment, the provisioning control apparatus 140 is configured to monitor and/or control the locked-down electronic component, e.g. chip 170 by writing and/or reading different states, such as the states "HIGH" and "LOW' to at least one, preferably at least two pins of the electronic component, e.g. chip 170. As already described above, via the provisioning apparatus 160, which may be mechanically and/or electrically connected with the pins of the electronic component, e.g. chip 170, the communication interface 143 of the provisioning control apparatus 160 may write and/or read different states, such as the states "HIGH" and "LOW' to one or more pins of the electronic component, e.g. chip 170.

In an embodiment, the provisioning control apparatus 140 is configured to write a bit mask to a plurality of pins of the electronic component, e.g. chip 170, which may then be sampled by the electronic component, e.g. chip 170. In an embodiment, the provisioning control apparatus 140 may be configured to implement more complex control mechanisms by means of a fine-grained timing of pin states based on appropriate timed pulses sent on a particular pin of the electronic component, e.g. chip 170. In an embodiment, this may instruct the electronic component, e.g. chip 170 - in real-time, during the provisioning session, and entirely under the control of the provisioning control apparatus 140 - to enter a particular mode or carry out a particular series of provisioning commands even after the electronic component, e.g. chip 170 may have been already locked down.

Likewise, for monitoring purposes, in an embodiment, the provisioning control apparatus 140 may be configured to read a bit mask from a plurality of pins of the electronic component, e.g. chip 170 for sampling the pin states at finely-controlled time intervals. This allows the electronic component, e.g. chip 170 to report, for instance, status information to the provisioning control apparatus 140 via the programmer 160 at key stages in the provisioning process, even after the electronic component, e.g. chip 170 has been securely locked down. In this way, following the security lockdown of the electronic component, e.g. chip 170, it is possible for the provisioning control apparatus 140 to determine, for instance, if the provisioning of the electronic component, e.g. chip 170 has been successful or has failed.

Thus, according to an embodiment, the provisioning control apparatus 140 may implement a direct communications protocol between the provisioning control apparatus 140 and a respective potentially already locked-down electronic component, e.g. chip 170 by using two-state lines. Advantageously, this allows to control and monitor the status of the provisioning process much more simply than a more complex communications protocol or medium which would not be practical for a programmer 160 configured to provision a plurality of electronic components, e.g. chips 170 in parallel.

Figures 2 and 3 show signaling diagrams illustrating some further details of the monitoring and control functions implemented by the provisioning control apparatus 140 according to an embodiment for a post-lockdown monitoring and controlling of a provisioned electronic component, e.g. chip 170.

In a stage 201 of figure 2 the secured, e.g. encrypted and/or authenticated provisioning data (which may comprise, for instance, an encrypted application image) is downloaded to the electronic component, e.g. chip 170 via a debug port thereof. In an embodiment, this stage 201 may further include downloading an installer app to the electronic component, e.g. chip 170. This installer app may be protected special security hardware of the electronic component, e.g. chip 170, for instance, by storing and/or executing the installer app in a security enclave of the electronic component, e.g. chip 170.

In this example, to complete the provisioning process the electronic component, e.g. chip 170 may perform the following further actions. The electronic component, e.g. chip 170 may lock down by disabling the debug port (stage 203 of figure 2). Decrypt and execute the installer app so that the installer app may decrypt the application image and install the application. Although these further stages are being performed on the electronic component, e.g. chip 170 which already has been locked down, embodiments disclosed herein allow the provisioning control apparatus 140 to obtain information about the outcome of the provisioning process of a respective electronic component, e.g. chip 170.

In an embodiment, the electronic component, e.g. chip 170 may be in one of the following states: (i) the provisioning process is still ongoing (not yet finished); (ii) the provisioning process has finished and has been successful; (iii) the provisioning process has finished and has not been successful; and (iv) the electronic component, e.g. chip 170 may have crashed and be in an unknown state. The distinction between states (iii) and (iv) is important for the following reason. If the provisioning process has finished and has not been successful, the electronic component, e.g. chip 170 is in a locked down state and can be disposed of freely. However, if the electronic component, e.g. chip 170 has crashed and is in an unknown state, it may leak security sensitive data and, therefore, must be securely destroyed (e.g. by shredding a chip wafer providing the electronic chip 170).

As illustrated in figure 2, in an embodiment, the provisioning control apparatus 140 may be configured to control (step 205a) and/or monitor (step 205b) the states of the electronic component, e.g. chip 170 using two-state lines. In an embodiment, these two-state lines may allow reporting when the provisioning process is finished and/or whether the provisioning process has been successful or not.

In an embodiment, the provisioning control apparatus 140 may be configured to sample the states defined by two pins of the electronic component, chip 170 after a predefined timeout. As already partially described above, in an embodiment, the states of the pins of the electronic component, e.g. chip 170 may have the meaning illustrated in the following table.

| "Finished" Pin | "Pass / Fail" Pin | Result meaning |
|---|---|---|
| 0 | n/a (0 or 1) | State unknown. Possible chip crash. |
| | | Mark chip failed and destroy securely. |
| 1 | 0 | Finished, chip locked down, but install failed. |
| | | Mark chip failed. |
| 1 | 1 | Finished, chip locked down, install success. |
| | | Ship chip. |

Figure 3 shows a signaling diagram illustrating some further details of a monitoring and control function implemented by the provisioning control apparatus 140 according to an embodiment for a post-lockdown monitoring and controlling of the provisioned electronic component, e.g. chip 170.

In step 301 of figure 3, the provisioning control apparatus 140 downloads an application image (and possibly an installer app) to the electronic component, e.g. chip 170.

In step 303 of figure 3, the electronic component, e.g. chip 170 executes the installer app for installing the application.

In step 305 of figure 3, two pins of the electronic component, e.g. chip 170 are set to the state "LOW" (referred to here as pins A and B).

In step 307 of figure 3, after the application has been installed, the electronic component, e.g. chip 170 enters a lockdown state.

In step 309 of figure 3, the electronic component, e.g. chip 170 performs further processing tasks for completing the provisioning procedure.

In steps 311 and 312 of figure 3, pin B is set to the state "HIGH", if the provisioning process was successful.

In steps 313 and 314 of figure 3, pin A is set to the state "HIGH", if the provisioning process has finished.

In steps 315 and 317 of figure 3, the provisioning control apparatus 140 samples via the programmer 160 the respective state of pin A and pin B.

Step 319 of figure 3 performs a reset.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto. The invention is defined by the appended claims.

## Claims

1. A provisioning control apparatus (140) configured to be coupled to a provisioning apparatus (160), the provisioning apparatus (160) being electrically connectable with a plurality of pins of an electronic component (170) for provisioning the electronic component (170) with security sensitive provisioning data (150), wherein the provisioning control apparatus (140) comprises:
a communication interface (143) configured to provide the security sensitive provisioning data (150) via the provisioning apparatus (160) to the electronic component (170);
wherein the communication interface (143) is further configured to trigger a lockdown of the electronic component (170); and
wherein the communication interface (143) is further configured to determine via the provisioning apparatus (160) one or more states of the plurality of pins of the electronic component (170) for determining a state of the electronic component (170), after the electronic component (170) has been locked down.

2. The provisioning control apparatus (140) of claim 1, wherein the communication interface (143) is further configured to set via the provisioning apparatus (160) one or more states of the plurality of pins of the electronic component (170) for controlling the state of the electronic component (170), after the electronic component (170) has been locked down.

3. The provisioning control apparatus (140) of claim 1 or 2, wherein the communication interface (143) is configured to determine via the provisioning apparatus (160) the one or more states of the plurality of pins of the electronic component (170) for determining the state of the electronic component (170), after a predetermined timeout.

4. The provisioning control apparatus (140) of any one of the preceding claims, wherein the plurality of pins of the electronic component (170) comprise two pins and wherein a first state of the two pins defines that the provisioning has been successful and has been finished.

5. The provisioning control apparatus (140) of claim 4, wherein a second state of the two pins defines that the provisioning has not been finished yet.

6. The provisioning control apparatus (140) of claim 4 or 5, wherein a third state of the two pins defines that the provisioning has not been successful and has been finished.

7. The provisioning control apparatus (140) of any one of claims 4 to 6, wherein a fourth state of the two pins defines that the electronic component (170) is in an undefined state.

8. An electronic component (170) for being provisioned with security sensitive provisioning data (150), wherein the electronic component (170) comprises:
a communication interface (173) configured to receive the security sensitive provisioning data (150) from a provisioning control apparatus (140) via a provisioning apparatus (160);
wherein the communication interface (173) is further configured to trigger a lockdown of the electronic component (170); and
wherein the communication interface (173) comprises a plurality of pins, wherein the communication interface (173) is configured to set one or more states of the plurality of pins for reporting a state of the electronic component (170), after the electronic component (170) has been locked down.

9. The electronic component (170) of claim 8, wherein the communication interface (173) is further configured to read one or more states of the plurality of pins for changing the state of the electronic component (170), after the electronic component (170) has been locked down.

10. The electronic component (170) of any one of claims 8 or 9, wherein the plurality of pins of the electronic component (170) comprise two pins and wherein a first state of the two pins defines that the provisioning has been successful and has been finished.

11. The electronic component (170) of claim 10, wherein a second state of the two pins defines that the provisioning has not been finished yet.

12. The electronic component (170) of claim 10 or 11, wherein a third state of the two pins defines that the provisioning has not been successful and has been finished.

13. The electronic component (170) of any one of claims 10 to 12, wherein a fourth state of the two pins defines that the electronic component (170) is in an undefined state.

## Patentansprüche

1. Provisionierungssteuerungsvorrichtung (140), die ausgebildet ist, mit einer Provisionierungsvorrichtung (160) gekoppelt zu werden, wobei die Provisionierungsvorrichtung (160) elektrisch mit einer Vielzahl von Pins einer elektronischen Komponente (170) verbindbar ist, um die elektronische Komponente (170) mit sicherheitssensiblen Provisionierungsdaten (150) zu versorgen, wobei die Provisionierungssteuerungsvorrichtung (140) umfasst:
eine Kommunikationsschnittstelle (143), die ausgebildet ist, die sicherheitssensiblen Provisionierungsdaten (150) über die Provisionierungsvorrichtung (160) an die elektronische Komponente (170) bereitzustellen;
wobei die Kommunikationsschnittstelle (143) ferner ausgebildet ist, eine Sperrung der elektronischen Komponente (170) auszulösen; und
wobei die Kommunikationsschnittstelle (143) ferner ausgebildet ist, über die Provisionierungsvorrichtung (160) einen oder mehrere Zustände der Vielzahl von Pins der elektronischen Komponente (170) zu bestimmen, um einen Zustand der elektronischen Komponente (170) zu bestimmen, nachdem die elektronische Komponente (170) gesperrt worden ist.

2. Provisionierungssteuerungsvorrichtung (140) nach Anspruch 1, wobei die Kommunikationsschnittstelle (143) ferner ausgebildet ist, über die Provisionierungsvorrichtung (160) einen oder mehrere Zustände der Vielzahl von Pins der elektronischen Komponente (170) einzustellen, um den Zustand der elektronischen Komponente (170) zu steuern, nachdem die elektronische Komponente (170) gesperrt worden ist.

3. Provisionierungssteuerungsvorrichtung (140) nach Anspruch 1 oder 2, wobei die Kommunikationsschnittstelle (143) ausgebildet ist, über die Provisionierungsvorrichtung (160) den einen oder die mehreren Zustände der Vielzahl von Pins der elektronischen Komponente (170) nach einer vorgegebenen Zeitüberschreitung zu bestimmen, um den Zustand der elektronischen Komponente (170) zu bestimmen.

4. Provisionierungssteuerungsvorrichtung (140) nach einem der vorhergehenden Ansprüche, wobei die Vielzahl von Pins der elektronischen Komponente (170) zwei Pins umfasst, und wobei ein erster Zustand der zwei Pins definiert, dass die Provisionierung erfolgreich war und abgeschlossen ist.

5. Provisionierungssteuerungsvorrichtung (140) nach Anspruch 4, wobei ein zweiter Zustand der zwei Pins definiert, dass die Provisionierung noch nicht abgeschlossen ist.

6. Provisionierungssteuerungsvorrichtung (140) nach Anspruch 4 oder 5, wobei ein dritter Zustand der zwei Pins definiert, dass die Provisionierung nicht erfolgreich war und abgeschlossen ist.

7. Provisionierungssteuerungsvorrichtung (140) nach einem der Ansprüche 4 bis 6, wobei ein vierter Zustand der zwei Pins definiert, dass sich die elektronische Komponente (170) in einem undefinierten Zustand befindet.

8. Elektronische Komponente (170) zur Provisionierung sicherheitssensibler Provisionierungsdaten (150), wobei die elektronische Komponente (170) umfasst:
eine Kommunikationsschnittstelle (173), die ausgebildet ist, die sicherheitssensiblen Provisionierungsdaten (150) von einer Provisionierungssteuerungsvorrichtung (140) über eine Provisionierungsvorrichtung (160) zu empfangen;
wobei die Kommunikationsschnittstelle (173) ferner ausgebildet ist, eine Sperrung der elektronischen Komponente (170) auszulösen; und
wobei die Kommunikationsschnittstelle (173) eine Vielzahl von Pins umfasst, wobei die Kommunikationsschnittstelle (173) ausgebildet ist, einen oder mehrere Zustände der Vielzahl von Pins einzustellen, um einen Zustand der elektronischen Komponente (170) zu melden, nachdem die elektronische Komponente (170) gesperrt worden ist.

9. Elektronische Komponente (170) nach Anspruch 8, wobei die Kommunikationsschnittstelle (173) ferner ausgebildet ist, einen oder mehrere Zustände der Vielzahl von Pins zu lesen, um den Zustand der elektronischen Komponente (170) zu ändern, nachdem die elektronische Komponente (170) gesperrt worden ist.

10. Elektronische Komponente (170) nach einem der Ansprüche 8 oder 9, wobei die Vielzahl von Pins der elektronischen Komponente (170) zwei Pins umfasst, und wobei ein erster Zustand der zwei Pins definiert, dass die Provisionierung erfolgreich war und abgeschlossen ist.

11. Elektronische Komponente (170) nach Anspruch 10, wobei ein zweiter Zustand der zwei Pins definiert, dass die Provisionierung noch nicht abgeschlossen ist.

12. Elektronische Komponente (170) nach Anspruch 10 oder 11, wobei ein dritter Zustand der zwei Pins definiert, dass die Provisionierung nicht erfolgreich war und abgeschlossen ist.

13. Elektronische Komponente (170) nach einem der Ansprüche 10 bis 12, wobei ein vierter Zustand der zwei Pins definiert, dass sich die elektronische Komponente (170) in einem undefinierten Zustand befindet.

## Revendications

1. Appareil de commande d'approvisionnement (140) configuré pour être couplé à un appareil d'approvisionnement (160), l'appareil d'approvisionnement (160) pouvant être connecté électriquement à une pluralité de broches d'un composant électronique (170) pour approvisionner le composant électronique (170) avec des données d'approvisionnement sensibles en matière de sécurité (150), dans lequel l'appareil de contrôle d'approvisionnement (140) comprend :
une interface de communication (143) configurée pour fournir les données d'approvisionnement sensibles en matière de sécurité (150) via l'appareil d'approvisionnement (160) au composant électronique (170) ;
dans lequel l'interface de communication (143) est en outre configurée pour déclencher un verrouillage du composant électronique (170) ; et
dans lequel l'interface de communication (143) est en outre configurée pour déterminer via l'appareil de fourniture (160) un ou plusieurs états de la pluralité de broches du composant électronique (170) pour déterminer un état du composant électronique (170), après le Le composant (170) a été verrouillé.

2. Appareil de contrôle d'approvisionnement (140) selon la revendication 1, dans lequel l'interface de communication (143) est en outre configurée pour définir via l'appareil d'approvisionnement (160) un ou plusieurs états de la pluralité de broches du composant électronique (170) pour contrôler l'état du composant électronique (170), après que le composant électronique (170) ait été verrouillé.

3. Appareil de contrôle d'approvisionnement (140) selon la revendication 1 ou 2, dans lequel l'interface de communication (143) est configurée pour déterminer via l'appareil d'approvisionnement (160) le ou les états de la pluralité de broches du composant électronique (170) pour déterminer l'état du composant électronique (170), après un délai d'attente prédéterminé.

4. Appareil de contrôle d'approvisionnement (140) selon l'une quelconque des revendications précédentes, dans lequel la pluralité de broches du composant électronique (170) comprend deux broches et dans lequel un premier état des deux broches définit que l'approvisionnement a été réussi et a été terminé.

5. Appareil de contrôle d'approvisionnement (140) selon la revendication 4, dans lequel un deuxième état des deux broches définit que l'approvisionnement n'est pas encore terminé.

6. Appareil de contrôle d'approvisionnement (140) selon la revendication 4 ou 5, dans lequel un troisième état des deux broches définit que l'approvisionnement n'a pas réussi et a été terminé.

7. Appareil de contrôle d'approvisionnement (140) selon l'une quelconque des revendications 4 à 6, dans lequel un quatrième état des deux broches définit que le composant électronique (170) est dans un état indéfini.

8. Composant électronique (170) destiné à être doté de données d'approvisionnement sensibles en matière de sécurité (150), dans lequel le composant électronique (170) comprend :
une interface de communication (173) configurée pour recevoir les données d'approvisionnement sensibles en matière de sécurité (150) provenant d'un appareil de contrôle d'approvisionnement (140) via un appareil d'approvisionnement (160) ;
dans lequel l'interface de communication (173) est en outre configurée pour déclencher un verrouillage du composant électronique (170) ; et
l'interface de communication (173) comprenant une pluralité de broches, l'interface de communication (173) étant configurée pour définir un ou plusieurs états de la pluralité de broches pour signaler un état du composant électronique (170), après que le composant électronique (170) a été verrouillé.

9. Composant électronique (170) selon la revendication 8, dans lequel l'interface de communication (173) est en outre configurée pour lire un ou plusieurs états de la pluralité de broches pour changer l'état du composant électronique (170), après que le composant électronique (170) 170) a été verrouillé.

10. Composant électronique (170) selon l'une quelconque des revendications 8 ou 9, dans lequel la pluralité de broches du composant électronique (170) comprend deux broches et dans lequel un premier état des deux broches définit que l'approvisionnement a été réussi et a été terminé.

11. Composant électronique (170) selon la revendication 10, dans lequel un deuxième état des deux broches définit que l'approvisionnement n'est pas encore terminé.

12. Composant électronique (170) selon la revendication 10 ou 11, dans lequel un troisième état des deux broches définit que l'approvisionnement n'a pas réussi et a été terminé.

13. Composant électronique (170) selon l'une quelconque des revendications 10 à 12, dans lequel un quatrième état des deux broches définit que le composant électronique (170) est dans un état indéfini.
